# EUROPEAN PATENT APPLICATION

(11) **EP 4 834 179 A1**
(43) Date of publication of application: **04.11.2026**
(21) Application number: 25185346.1
(22) Date of filing: 25.06.2025
(51) Int. Cl.: A47J 31/54, A47J 31/56

(54) **METHOD FOR CONTROLLING A WATER FLOW IN AN ESPRESSO COFFEE MACHINE**

(30) Priority: 28.04.2025 IT 202500009411
(71) Applicant: Costanza, Davide, 81541 Munich (DE)
(72) Inventor: Costanza, Davide, 81541 Munich (DE)
(74) Representative: Cammareri, Emanuele

(57) **Abstract**

A method of controlling the temperature of water flows in an espresso coffee machine, the machine comprising boiler means and heat exchange means located in said boiler means for heating water and for allowing the circulation of water flows to and from said exchange means along tubular pipes; characterized in that it comprises the step of regulating said water flows in said tubular pipes.

## Description

The present invention relates to a method for controlling a water flow in an espresso coffee machine.

In particular, the present invention is advantageously used in a coffee machine for use in public establishments such as bars, restaurants and the like or for domestic use for dispensing a hot coffee-based beverage, such as an espresso coffee machine produced by *Faema*^{®} called "E 61" with thermosiphonic operation, to which the following description makes explicit reference without losing generality, in order to optimally regulate and control the hot water flow circulating in the coffee machine itself.

Currently, the use of espresso coffee machines that exploit the thermosiphonic operating principle is universally known.

A coffee machine of the type mentioned above is essentially provided with a boiler inside which there is a heat exchanger, which is designed to heat the water flow entering the exchanger itself; the hot water produced in this way can flow along an outlet pipe towards a beverage dispensing unit.

Functionally, the upper part of the exchanger is designed to release heat to the outside air and the water inside it cools down.

The consequence is that the colder water, being denser, sinks, passing through a lower tube and returning to the bottom of the heat exchanger, thus generating a circular flow that constantly supplies hot water to the upper part of the exchanger itself.

The temperature of the circulating water is functionally detected at a fixed point determined in the aforementioned boiler; however, such a temperature is very difficult to achieve effectively and to control, making its management imprecise, with the result that the coffee beverage produced and dispensed is not optimal and unpleasant to taste.

The object of the present invention is to overcome the above-mentioned drawbacks. In particular, an object of the present invention is to provide a method capable of optimally and effectively controlling the temperature and water flow circulating in the heat exchanger of a thermosiphon-operated espresso coffee machine.

The functional characteristics of the methodology of the present invention and its advantages over the known art will be even clearer and more evident from the claims below and, in particular, from an examination of the following exposition, which describes a preferred, but not limiting, schematization of the process in question. The methodology in question is used in a thermosiphon-operated espresso coffee machine, provided with a boiler inside of which a heat exchanger unit is arranged suitable for heating water in such a way that a hot water flow generated can flow along a tubular outlet pipe towards a beverage dispensing unit.

Advantageously, in an upper portion of the aforementioned heat exchanger unit, the methodology in question provides for regulating the water flow by valve means, for example stepper motors or the like, arranged along the aforementioned outlet pipe to control the flow rate of the aforementioned hot water flow.

Specifically, said flow regulation phase includes the use of electromechanical valve means or equivalent, which are placed along the aforementioned outlet pipe and whose opening/closing occurs upon command of thermal probe means for detecting the temperature of the water flow.

The aforementioned valves can also be mounted inside a *Faema*^{®} *unit* "E 61". Preferably, the methodology in question provides that the aforementioned flow regulation phase includes the use of electromechanical valve means or equivalent, which are also placed along a lower tube of the heat exchanger and whose opening/closing is regulated upon command of additional probe means for detecting the temperature of the water flow.

It should finally be noted that the method in question ensures effective and faster initial heating when switching on the espresso coffee machine.

Furthermore, it is possible to vary the temperature of the coffee independently of the temperature/pressure in the boiler (and vice versa).

In particular, and advantageously, it is possible to achieve the potential functionality of a dual-boiler machine while using a single-boiler heat exchanger.

## Claims

1. Method for controlling the temperature of water flows in an espresso coffee machine, the machine comprising boiler means and heat exchange means located in said boiler means for heating water and for allowing the circulation of water flows to and from said exchange means along tubular pipes; **characterized in that** it comprises the step of regulating said water flows in said tubular pipes.

2. Method according to claim 1, **characterized in that** said step of regulating said flows comprises the further step of detecting the temperature of the water flow in said tubular pipes.

3. Method according to claim 1 or 2, **characterized in that** said step of regulating is carried out by means of valve means.

4. Method according to claim 3, **characterized in that** said valve means comprise stepper motors or the like.

5. Method according to claim 3, **characterized in that** said valve means comprise electromechanical valves or equivalent.

6. Method according to one or more of claims 2 to 5, **characterized in that** said temperature detection is carried out by means of thermal probe detection means; said probe means controlling the opening/closing of said valve means.
